# FASCICULE DE BREVET EUROPEEN

(11) **EP 1 385 903 B1**
(45) Date de publication et mention de la délivrance du brevet: **29.08.2007**
(21) Numéro de dépôt: 02724405.2
(22) Date de dépôt: 08.04.2002
(51) Int. Cl.: C08K 5/00, C08L 83/04, C08L 83/06, C08L 83/08

(54) **COMPOSITION POLYORGANOSILOXANE (POS) MONOCOMPOSANTE RETICULANT ET DURCISSANT EN ELASTOMERE NON JAUNISSANT, A TEMPERATURE AMBIANTE ET EN PRESENCE D'EAU, ET ELASTOMERE AINSI OBTENU**
BEI UMGEBUNGSTEMPERATUR DURCH FEUCHTIGKEIT ZUM NICHTGILBENDEM ELASTOMER HÄRTENDE EINKOMPONENTEN POLYORGANOSILOXANZUSAMMENSETZUNG UND DARAUS HERGESTELLTE ELASTOMERE
SINGLE-COMPONENT POLYORGANOSILOXANE COMPOSITION (POS) WHICH CROSS-LINKS AND HARDENS INTO A NON-YELLOWING ELASTOMER AT ROOM TEMPERATURE AND IN THE PRESENCE OF WATER, AND ELASTOMER THUS OBTAINED

(30) Priorité: 13.04.2001 FR 0105138
(43) Date de publication de la demande: 04.02.2004
(73) Titulaire: Henkel Kommanditgesellschaft auf Aktien, 40589 Düsseldorf (DE)
(72) Inventeur: DALBE, Bernard, F-69005 LYON (FR); PREBET, Christiane, F-69440 TALUYERS (FR)
(86) Numéro de dépôt international: PCT/FR2002/001214
(87) Numéro de publication internationale: WO 2002/083778

(56) Documents cités:
- EP-A- 0 034 877
- EP-A- 0 799 859
- EP-A- 0 853 101
- FR-A- 2 421 195
- FR-A- 2 715 663
- US-A- 5 908 909
- PATENT ABSTRACTS OF JAPAN vol. 006, no. 180 (C-125), 14 septembre 1982 (1982-09-14) & JP 57 096044 A (TOSHIBA SILICONE CO LTD), 15 juin 1982 (1982-06-15)

## Description

Le domaine de l'invention est celui des mastics silicones monocomposants, stables au stockage en absence d'humidité, non jaunissants, dotés de propriétés biocides (bactéricides/fongicides) performantes et réticulant en élastomères adhérents sur divers supports, à température ambiante (par exemple 5 à 35°C) et en présence d'eau (par exemple humidité ambiante).

De tels mastics à base d'élastomères silicones, sont utilisés dans de nombreuses applications, notamment dans le bâtiment, en tant que moyen d'étanchéification, de jointoiement et/ou d'assemblage entres autres. Les propriétés rhéologiques de ces mastics silicones monocomposants (forme pâteuse) font l'objet de beaucoup d'attention dans ces applications. Il en va de même en ce qui concerne leur résistance aux intempéries et à la chaleur, leur flexibilité à basse température, leur facilité de mise en oeuvre et leur réticulation/durcissement rapide in situ, au contact de l'humidité de l'air.

Par ailleurs, ces mastics d'étanchéité à base de silicone sont employés dans des environnements humides et chauds tels que les salles de bain ou les cuisines. Ces conditions sont propices à la prolifération de microorganismes tels que des bactéries, champignons ou autres moisissures à la surface du mastic silicone. Une telle invasion microbiologique est de nature à altérer l'aspect de la surface du joint silicone : colorations, salissures et taches noires ou rosées.

Pour tenter de mettre fin à ces problèmes esthétiques, les formulateurs de mastics silicones ont eu recours à différents additifs biocides (bactéricides et fongicides). La littérature technique à cet égard est riche. A titre d'exemple, on peut citer la demande de brevet européen EP-A-0 034 877 qui propose l'utilisation d'un fongicide du type diiodo-p-tolylsulfone ou complexe du titane, dans les mastics silicones acides ou neutres (alcoxy), c'est-à-dire comprenant un silane acétoxylé ou alcoxylé -respectivement- à titre de réticulant.

La demande de brevet français FR-A-2 421 195 décrit une composition de polyorganosiloxane vulcanisable en élastomère en présence d'humidité à température ambiante. Cette composition comprend un POS A porteur de motifs hydroxyles fonctionnalisables par des radicaux oximes, acyles, amines, amides ou alcoxy, un réticulant B porteur de radicaux de fonctionnalisation, un fongicide C constitué par du 2-(4-thiazolyl)benzimidazole et un tensioactif D du type copolymère polysiloxane/polyoxyalkylène (éther nonylphénylique de polyoxyéthylène).

Il s'est avéré que l'introduction de substance biocide, par exemple antifongique dans les formulations de mastics silicones, peut altérer fortement les propriétés de ces mastics. Ce sont parfois les propriétés de l'élastomère réticulé qui sont affectés (diminution de la dureté, de la vitesse de prise...), mais le plus fréquemment c'est la stabilité au stockage du mastic non réticulé qui est réduite.

En outre, dans le cas de mastic silicone blanc ou translucide, il est fréquent que le biocide provoque un jaunissement important du mastic, directement dans la cartouche ou après réticulation de l'élastomère.

De tels effets secondaires ont notamment pu être observés pour les compositions de mastic silicone décrites dans les brevets EP-A-0 034 877 et FR-A-2 421 195 évoqués ci-dessus. Comme autres exemples de fongicides entraînant le jaunissement des mastics élastomères silicones, on peut citer le 2,3,5,6-tétrachloro-4-méthylsulfonylepipéridine (JP-A-51606158) et les dérivés carbamates de benzimidazole N-substitués (JP-A-560038348).

C'est alors qu'ont vu le jour différentes propositions techniques, en vue de pallier les effets secondaires néfastes des mastics silicones monocomposants additivés en biocides.

La demande de brevet européen EP-A-0 799 859 est l'une de ces propositions. Elle divulgue des compositions silicones réticulables à température ambiante comprenant un polyméthylsiloxane à extrémités silanol fonctionnalisable par des radicaux de type oxime fournis par un réticulant constitué par un silane comprenant au moins trois radicaux oximes (cétoximes) par molécule. Ce mastic silicone comprend un fongicide dégradable sous radiation ultra-violette (diido-méthyl-p-tolyl-sulfone) et un additif constitué par l'oxyde de zinc. Cette proposition technique antérieure ne donne pas entière satisfaction en ce qui concerne le maintien de la transparence et le non-jaunissement du mastic.

Plus récemment, les formulateurs de mastics silicones additivés de biocides, se sont trouvés confrontés à une nouvelle contrainte. En effet, le développement des connaissances sur la toxicité des biocides, associé à l'évolution des réglementations dans différents pays, et notamment la nouvelle directive européenne sur les biocides, ont considérablement réduit le nombre de substances biocides potentiellement utilisables dans les mastics silicones.

La demande de brevet japonais JP-A-57096044 décrit une composition polysiloxane du type mastic monocomposant réticulable à température ambiante et en présence d'eau, dans laquelle est incorporé un fongicide choisi parmi les dérivés organostanniques ou organostanneux. Un tel mastic se heurterait à cette contrainte toxicologique du fait de la nature du fongicide sélectionné. En outre, une telle composition n'a pas fait toutes ses preuves en matière de non-jaunissement.

La demande de brevet européen EP-A-1 035 159 divulgue une composition de mastic silicone neutre de type oxime comprenant un POS A fonctionnalisé, un réticulant silane porteur de radicaux de fonctionnalisation et un antibactérien sélectionné dans la famille des dérivés ferreux (FeSO₄). Un composé porteur de fonctions triazole peut être ajouté à la composition selon l'EP-A-1 035 159. Même si cette composition pourrait être tolérée sur le plan toxicologique, elle reste perfectible en termes de performance biocide.

La demande de brevet français FR-A-2 715 663 concerne des matériaux d'étanchéité de type acétoxy-silicone, cétoximo-silicone ou alcoxy-silicone, vulcanisables à la température ambiante, conditionnés sous atmosphère anhydre, et durcissant après mise en présence d'eau ou de vapeur d'eau à la température ambiante, pour donner des élastomères. Ce sont donc des mastics silicones monocomposants, par exemple à base d'acétoxy-silicone et comprenant :
- 76,00 % en poids d'un polyorganosiloxane POS, à groupes terminaux silanol,
- 10,66 % en poids de silice fumée traitée avec de l'octaméthylcyclotétra-siloxane,
- 8,18 % d'une résine silicone POS de type MDT,
- 0,09 % en poids d'un mélange de POS + stéarate d'aluminium (15 %),
- 3,90 % d'une solution de catalyseur contenant :
   - 27,1 % en poids de di-t-butoxy-diacétoxysilane,
   - 62,3 % en poids de méthyltriacatoxysilane,
   - 0,6 % en poids de dilaurate de dibutyl-étain,
- et enfin 0,30 % de di-iodométhyl-para-tolylsulfone, à titre de fongicide.

Les compositions selon le FR-A-2 715 663 sont présentées comme ayant des propriétés physiques améliorées. Il n'est nullement fait allusion à de quelconques propriétés anti-jaunissement. L'invention selon ce document reste donc perfectible notamment à cet égard.

Compte tenu de cet arrière plan technologique, l'un des objectifs essentiels de la présente invention est de proposer une composition de mastic silicone monocomposant, non jaunissant, stable au stockage en l'absence d'humidité, résistants à la prolifération de microorganismes et aptes à réticuler/durcir en élastomères adhérents (par exemple blanc ou translucide), à température ambiante (5-35°C) et en présence d'eau essentiellement apportée par l'humidité ambiante.

Un autre objectif essentiel de l'invention est de fournir une composition silicone POS monocomposante du type visé dans le paragraphe précédent, et qui subira, in situ, au cours de sa préparation une réaction de fonctionnalisation complète ou le plus proche possible du degré maximal de fonctionnalisation accessible, ce mastic silicone monocomposant présentant de ce fait un haut niveau de stabilité au stockage en cartouche.

Un autre objectif essentiel de la présente invention est de fournir une composition de mastic silicone monocomposant (acide : acétoxyle ; ou neutre: alcoxy ou oxime) contenant un additif biocide efficace contre les bactéries, les champignons et les moisissures notamment, sans affecter les autres propriétés du mastic, dont notamment : stabilité avant réticulation, non-jaunissement avant et après réticulation, bonnes qualités mécaniques du mastic réticulé et adhérence du mastic réticulé sur le plus grand nombre de supports.

Un autre objectif essentiel de l'invention est de fournir une composition de mastic silicone monocomposant, translucide en couche mince ou opaque et du type de celui visé dans les paragraphes précédents, comprenant un biocide performant sur un très large spectre, non jaunissant avant et après réticulation, économique et présentant un profil toxicologique favorable, notamment au regard des nouvelles réglementations sur les biocides.

Un autre objectif essentiel de l'invention est de fournir une composition POS monocomposante qui ne fait pas appel obligatoirement à un auxiliaire promoteur de l'adhérence de l'élastomère réticulé sur différents supports et qui permette néanmoins d'obtenir un mastic réticulé (translucide en couche mince ou opaque, par exemple), dont l'adhérence est déjà correcte sur certains supports, en particulier le verre.

Un autre objectif essentiel de l'invention est de fournir une composition de mastic silicone monocomposant, stable au stockage en particulier en cartouche à l'état fonctionnalisé, non jaunissant, non sujet à la contamination microbiologique, adhérent, et susceptible d'être préparé en utilisant indifféremment un mode discontinu ("batch") ou un mode continu.

Un autre objectif essentiel de l'invention est de fournir une composition de mastic silicone monocomposant transformable en élastomère silicone par réticulation/durcissement à température ambiante, en présence d'eau, ce mastic réticulé se devant de ne pas être sensible au jaunissement, d'être résistant à la contamination microbiologique, d'être de bonne qualité mécanique et d'être adhérent sur de nombreux supports, en particulier sur les matières plastiques comme par exemple polychlorure de vinyle (PVC) et le polyméthacrylate de méthyle (PMMA).

Ces objectifs, parmi d'autres, sont atteints par la présente invention qui concerne, en premier lieu, une composition polyorganosiloxane (POS) monocomposante, stable au stockage en absence d'humidité et réticulant, en présence d'eau, en élastomère, non jaunissant et adhérent, caractérisée :
* en qu'elle est exempte d'agent nucléophile (notamment aminé) ou en contient en quantité inférieure à 1000 ppm de préférence à 500 ppm par rapport à la composition totale ;
* et en ce qu'elle comprend :
   -A- au moins un polyorganopolysiloxane linéaire réticulable A de formule: 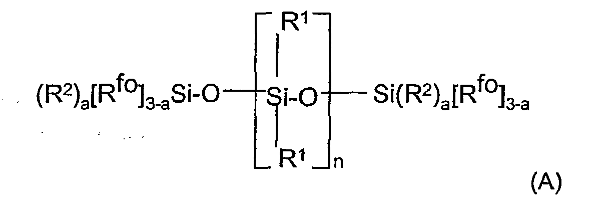 dans laquelle :
      - les substituants R¹, identiques ou différents, représentent chacun un radical monovalent hydrocarboné saturé ou non en C₁ à C₁₃, substitué ou non substitué, aliphatique, cyclanique ou aromatique ;
      - les substituants R², identiques ou différents, représentent chacun un radical monovalent hydrocarboné saturé ou non en C₁ à C₁₃, substitué ou non substitué, aliphatique, cyclanique ou aromatique ;
      - les substituants de fonctionnalisation R^{fo}, identiques ou différents, représentent chacun :
         - un reste oxime de formule :

            (R³)₂ C^{‗}N-O-

            avec R³ représentant indépendamment, un alkyle linéaire ou ramifié en C₁ à C₈ ; un cycloalkyle en C₃ à C₈, un alcényle en C₂-C₈,
         - un reste alcoxy de formule :

            OR⁴(CH₂CH₂O)_{b}-

            avec R⁴ représentant indépendamment un alkyle linéaire ou ramifié en C₁ à C₈ ; un cycloalkyle en C₃ à C₈ et b = 0 ou 1;
         - un reste acyle de formule : 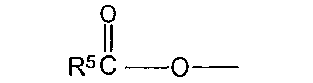 avec R⁵ représentant un radical monovalent hydrocarboné saturé ou non en C₁ à C₁₃, substitué ou non substitué, aliphatique, cyclanique ou aromatique,
      - n a une valeur suffisante pour conférer au POS **A** une viscosité dynamique à 25°C allant de 1.000 à 1.000.000 mPa.s ;
      - a est zéro ou 1 ;
   -B- éventuellement au moins une résine polyorganosiloxane **B** fonctionnalisée par au moins un radical R^{f0} répondant à la définition donnée supra et présentant, dans sa structure, au moins deux motifs différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule (**A**), ladite résine ayant une teneur pondérale en radicaux fonctionnels R^{fo} allant de 0,1 à 10 %, étant entendu qu'une partie des radicaux R¹ sont des radicaux R^{fo};
   -C- éventuellement au moins un réticulant **C** de formule :

      (R²)ₐSi [R^{fo}]₄₋ₐ

      avec R², R^{fo} et a étant tels que définis ci-dessus,
   -D- éventuellement au moins un polydiorganosiloxane **D** linéaire non réactif et non fonctionnalisé R^{fo} et de formule : 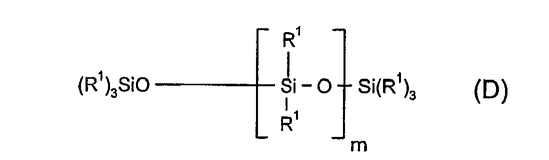 dans laquelle :
      - les substituants R¹, identiques ou différents, ont les mêmes significations que celles données ci-avant pour le polyorganosiloxane **A** de formule (**A**) ;
      - m a une valeur suffisante pour conférer au polymère de formule (**D**) une viscosité dynamique à 25°C allant de 10 à 200.000 mPa.s ;
   -E- au moins un biocide **E** choisi dans le groupe comprenant N-octylisothiazoline-3-one, di-chloro-N-octyl-isothiazoline-3-one, N-butylbenzisothiazoline-3-one, lodo-propynyl-N-butylcarbamate.et leurs mélanges;
   -F- une charge minérale **F**, de préférence à base de silice et/ou de carbonate;
   -G- une quantité efficace d'un catalyseur de réticulation/durcissement **G** choisi parmi:
      - les sels de métaux choisis dans le groupe comprenant : Sn, Zn, Fe, Pb, Ba, Mn et Zr, de préférence sous forme de monocarboxylates et/ou de dicarboxylates,
      - les dérivés organiques du titane,
      - et leurs mélanges;
   -H- éventuellement au moins un agent auxiliaire **H** non nucléophile, de préférence non aminé.

Il est à noter qu'au moins une partie du caractère inventif du mastic selon l'invention, tient à la sélection judicieuse et avantageuse d'un groupe bien délimité de biocides E, en ayant pris soin d'exclure de la composition des composés nucléophiles dès lors que ceux ci sont présents en quantité supérieure à 1000 ppm de préférence supérieure à 500 ppm par rapport à la composition totale.

La mise en oeuvre de ces biocides dans les compositions selon l'invention, permet d'obtenir des résultats particulièrement surprenants et inattendus en matière de résistance au jaunissement et de stabilité au stockage de la composition non réticulée.

La composition de mastic silicone monocomposant selon l'invention possède toutes les propriétés intéressantes et propres à ce type de produit et présente au surplus une activité biocide (bactéricide et fongicide) importante, sans que cela n'entraîne de jaunissement, ni de perte de la stabilité au stockage.

En outre, la composition de mastic selon l'invention est économique et conduit à des élastomères réticulés doués de propriétés mécaniques avantageuses et adhérant sur de nombreux supports, sans même que la présence d'un auxiliaire ou promoteur d'adhérence ne soit totalement indispensable.

La composition selon l'invention correspond à une forme de réalisation dans laquelle le constituant essentiel, à savoir le POS **A** est au moins partiellement fonctionnalisé au niveau de ses extrémités (initialement porteuses de fonctions hydroxyles) par des radicaux de fonctionnalisation R^{fo} liés au silane réticulant **C.** Les OH du précurseur du POS **A** réagissent avec les R^{fo} du silane réticulant **C,** par condensation. Le POS **A** est fonctionnalisé selon des techniques connues de l'homme du métier. Ce POS **A** fonctionnalisé correspond à une forme stable en absence d'humidité, du mastic monocomposant ici considéré. En pratique, cette forme stable est celle de la composition conditionnée en cartouches hermétiquement fermées, qui seront ouvertes par l'opérateur lors de l'utilisation et qui lui permettront d'appliquer le mastic sur tous les supports souhaités.
Le précurseur hydroxylé **A'** du POS **A** fonctionnalisé R^{fo} est un polydiorganosiloxane α,ω-hydroxylé de formule : 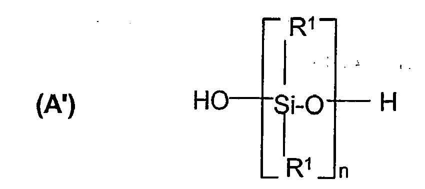 avec R¹ et n tel que défini ci-dessus dans la formule (A).

L'éventuelle résine POS **B** fonctionnalisée R^{fo} est produite de la même façon que le POS **A** fonctionnalisé R^{fo}, par condensation avec le silicone réticulant **C** porteur de radicaux de fonctionnalisation R^{fo}.

Le précurseur de la résine POS **B** fonctionnalisée R^{fo} est une résine POS **B**' hydroxylée répondant à la définition donnée ci-dessus pour **B** à la différence qu'une partie des radicaux R¹ correspondent à des OH.

La composition de mastic monocomposant selon l'invention peut être du type acide (acétoxy...) ou bien encore du type neutre (oxime, alcoxy...).

Selon une disposition préférée de l'invention, la composition de mastic silicone monocomposant concernée est plutôt de type neutre, par exemple oxime ou alcoxy, ce qui signifie que les substituants de fonctionnalisation R^{fo} des formules **A B** et **C** sont identiques ou différents, représentent chacun :
- un reste oxime de formule :

   (R³)₂ C^{‗}N-O-

   avec R³ représentant indépendamment, un alkyle linéaire ou ramifié en C₁ à C₈ ; un cycloalkyle en C₃ à C₈, un alcényle en C₂-C₈, de préférence sélectionné dans le groupe comprenant : méthyle, éthyle, propyle, butyle, vinyle, allyle;
- et/ou un reste alcoxy de formule :

   OR⁴(CH₂CH₂O)_{b}-

   avec R4 représentant indépendamment, un alkyle linéaire ou ramifié en C₁ à C₈ ; un cycloalkyle en C₁ à C₈, de préférence sélectionné dans le groupe comprenant : méthyle, éthyle, propyle, butyle et méthyglycol, et b = 0 ou 1.

En effet, il a pu être observé que les problèmes de stabilité en cartouche et de jaunissement en présence de biocide, sont plus aigus dans le cas où l'on a affaire à des mastics silicones monocomposants neutres de type oxime ou alcoxy.

Dans un mode préféré de réalisation de l'invention, les substituants de fonctionnalisation R^{fo} sont de type alcoxy et répondent à la formule OR⁴(OCH₂CH₂)_{b} -telle que définie ci-dessus et le catalyseur de réticulation/durcissement **G** comprend au moins un sel d'acide carboxylique de Zr, Fe, Pb, Ba ou Mn et/ou au moins un dérivé organique du titane choisi dans le groupe constitué par :
+ des monomères **G1** de formule :

   Ti[(OCH₂CH₂)_{c} OR⁷]₄ (G1)

   dans laquelle :
   - les substituants R⁷, identiques ou différents, représentent chacun un radical alkyle, linéaire ou ramifié, en C₁ à C₁₂ ;
   - c représente zéro, 1 ou 2 ;
   - avec les conditions selon lesquelles, quand le symbole c représente zéro, le radical alkyle R⁷ possède de 2 à 12 atomes de carbone, et quand le symbole c représente 1 ou 2, le radical alkyle R⁷ possède de 1 à 4 atomes de carbone ;
+ des polymères **G2** découlant de l'hydrolyse partielle des monomères de formule (**G1**) dans laquelle le symbole R⁷ a la signification précitée avec le symbole c représentant zéro.

Parmi les auxiliaires **H** ou additifs particulièrement intéressants pour la composition selon l'invention, on citera les promoteurs d'adhérence. Ainsi la composition POS de mastic monocomposant selon l'invention peut comprendre au moins un promoteur d'adhérence **H1** non nucléophile en particulier et non aminé, de préférence choisi parmi les composés organosiliciques portant à la fois :
(1) des groupes hydrolysables liés à l'atome de silicium et
(2) des groupes organiques substitués par des radicaux choisis dans le groupe des radicaux (méth)acrylate, époxy, et alcényle, et plus préférentiellement encore dans le groupe comportant :
   - le vinyltriméthoxysilane (VTMS),
   - le 3-Glycidoxypropyl-triméthoxysilane (GLYMO),
   - le méthacryloxypropyltriméthoxysilane (MEMO),
   - et leur mélanges.

Pour détailler un peu plus la nature des éléments constitutifs de la composition selon l'invention, il importe de préciser que les substituants R¹ des polymères POS **A** fonctionnalisés, des résines **B** fonctionnalisées R^{fo} et des polymères **D** facultatifs non fonctionnalisés sont sélectionnés dans le groupe formé par :
- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone, les radicaux méthyle, éthyle, propyle, isopropyle, n-hexyle, phényle, vinyle et 3,3,3-trifluoropropyle étant particulièrement préférés.

Plus précisément encore, et à titre non limitatif, les substituants R¹ mentionnés ci-dessus pour les polymères POS **A** et **D** (facultatifs) comprennent :
- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2-yle,
- les radicaux aryles et halogénoaryles mononucléaires ayant de 6 à 13 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemples concrets de motifs siloxyle D : (R¹)₂SiO_{2/2} présents dans les diorganopolysiloxanes **A** fonctionnalisés R^{fo} de formule (A) et dans les diorganopolysiloxanes non réactifs **D** facultatifs de formule (D), on peut citer :

(CH₃)₂SiO,

CH₃(CH₂=CH)SiO,

CH₃(C₆H₅)SiO,

(C₆H₅)₂SiO,

CF₃CH₂CH₂(CH₃)SiO,

NC-CH₂CH₂(CH₃)SiO,

NC-CH(CH₃)CH₂(CH₂=CH)SiO,

NC-CH₂CH₂CH₂(C₆H₅)SiO.

Il doit être compris que, dans le cadre de la présente invention, on peut utiliser comme polymères fonctionnalisés **A** de formule (A) un mélange constitué de plusieurs polymères initialement hydroxylés et au moins en partie fonctionnalisés R^{fo}, qui diffèrent entre eux par la valeur de la viscosité et/ou la nature des substituants liés aux atomes de silicium. Il doit être indiqué de plus que les polymères fonctionnalisés **A** de formule **(A)** peuvent éventuellement comprendre des motifs siloxyle T de formule R¹SiO_{3/2} et/ou des motifs siloxyles Q : SiO_{4/2}, dans la proportion d'au plus 1 % (ce % exprimant le nombre de motifs T et/ou Q pour 100 atomes de silicium). Les mêmes remarques s'appliquent aux polymères **D** non fonctionnalisés et non réactifs **D** (facultatifs) de formule (D).

Les substituants R¹ des polymères fonctionnalisés **A** et des polymères non réactifs et non fonctionnalisés **D** (facultatifs) avantageusement utilisés, du fait de leur disponibilité dans les produits industriels, sont les radicaux méthyle, éthyle, propyle, isopropyle, n-hexyle, phényle, vinyle et 3,3,3-trifluoropropyle. Plus avantageusement, au moins 80 % en nombre de ces substituants sont des radiaux méthyle.

On met en oeuvre des polymères fonctionnalisés **A** ayant une viscosité dynamique à 25°C allant de 1.000 à 1.000.000 mPa.s et, de préférence, allant de 10.000 à 200.000 mPa.s.

S'agissant des polymères non fonctionnalisés **D** (facultatifs), ils présentent une viscosité dynamique à 25°C allant de 10 à 200.000 mPa.s et, de préférence allant de 50 à 150.000 mPa.s.

Les polymères non réactifs et non fonctionnalisés **D**, quand on les utilise, peuvent être introduits en totalité ou en plusieurs fractions et à plusieurs stades ou à un seul stade de la préparation de la composition. Les éventuelles fractions peuvent être identiques ou différentes en termes de nature et/ou de proportions. De préférence, **D** est introduit en totalité à un seul stade.

Comme exemples de substituants R¹ des résines POS **B** fonctionnalisées R^{fo} qui conviennent ou qui sont avantageusement utilisés, on peut citer les divers radicaux R¹ du type de ceux mentionnés nommément ci-avant pour les polymères fonctionnalisés **A** et les polymères non réactifs et non fonctionnalisés **D** (facultatifs). Ces résines silicones sont des polymères polyorganosiloxanes ramifiés bien connus dont les procédés de préparation sont décrits dans de nombreux brevets. Comme exemples concrets de résines utilisables, on peut citer les résines MQ, MDQ, TD et MDT.

De préférence, comme exemples de résines utilisables, on peut citer les résines POS **B** fonctionnalisées R^{fo} ne comprenant pas, dans leur structure, de motif Q. De manière plus préférentielle, comme exemples de résines utilisables, on peut citer les résines TD et MDT fonctionnalisées comprenant au moins 20 % en poids de motifs T et ayant une teneur pondérale en groupement R^{fo} allant de 0,3 à 5 %. De manière encore plus préférentielle, on utilise des résines de ce type, dans la structure desquelles au moins 80 % en nombre des substituants R¹ sont des radicaux méthyle. Les groupements fonctionnels R^{fo} des résines **B** peuvent être portés par les motifs M, D et/ou T.

Concernant les POS **A** fonctionnalisés et les réticulants **C**, on peut citer à titre d'exemples concrets de substituants R² qui conviennent particulièrement, les mêmes radicaux que ceux mentionnés nommément ci-avant pour les substituants R¹ des polymères fonctionnalisés **A** et des polymères non fonctionnalisés et non réactifs **D**.

S'agissant des substituants R³, R⁴, R⁵ constitutifs des radicaux de fonctionnalisation R^{fo}, on mentionnera que les radicaux alkyles en C₁-C₄, tels que les radicaux méthyle, éthyle, propyle, isopropyle et n-butyle, s'avèrent plus spécialement appropriés.

Selon le mode préféré de réalisation de la composition selon l'invention, les radicaux de fonctionnalisation R^{fo} sont de type alcoxy et plus préférentiellement encore sont issus de réticulants silanes C choisis dans le groupe comprenant

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH_{2]}

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

En pratique, les réticulants silane **C** porteurs des radicaux de fonctionnalisation R^{fo} sont choisis parmi :
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, (CH₂=CH)Si(OC₂H₅)₃.

Suivant une caractéristique remarquable de l'invention, la composition peut comprendre un catalyseur de fonctionnalisation, en présence duquel se déroule la réaction des précurseurs hydroxylés **A'** et des précurseurs hydroxylés **B'** avec les réticulants C, conduisant au POS **A** et à la résine **B** respectivement.

Ce catalyseur de fonctionnalisation peut être sélectionné avantageusement parmi les composés suivants :
- l'acétate de potassium (cf. US-A-3 504 051),
- les oxydes minéraux divers (cf. FR-A-1 495 011),
- les carbamates (cf. EP-A-0 210 402),
- la lithine (cf. EP-A-0 367 696),
- la soude ou la potasse (cf. EP-A-0 457 693).

Dans certains cas, il peut être nécessaire de neutraliser le catalyseur de fonctionnalisation. Ainsi, s'agissant de la lithine, on peut employer à cette fin de nombreux produits, comme par exemple :
- du trichloroéthyllphosphate,
- du diméthylvinylsilylacétate,
- un silylphosphate du type de ceux décrits dans le brevet français FR-B-2 410 004,
- ou une silice de précipitation ou de combustion.

On recommande, dans le cadre de la présente invention, d'utiliser comme catalyseur de fonctionnalisation : la lithine, de formule LiOH ou LiOH, H₂O. De préférence, elle est utilisée en solution dans au moins un alcool aliphatique **H2** ayant de 1 à 3 atomes de carbone et qui sera défini plus en détail ci-après.

On met en oeuvre une quantité efficace de catalyseur de fonctionnalisation, c'est-à-dire une quantité telle que la vitesse de réaction de fonctionnalisation soit la plus élevée possible, notamment en utilisant Si(OC₂H₅)₄, CH₃Si(OCH₃)₃, CH₃Si(OC₂H₅)₃, (C₂H₅O)₃Si(OCH₃), (CH₂=CH)Si(OCH₃)₃, (CH₂=CH)Si(OC₂H₅)₃ comme agent de fonctionnalisation qui n'est autre que le réticulant **C**. Dans la plupart des cas, on utilise de 0,001 à 5 moles de catalyseur pour 1 mole de groupements silanols (≡Si-OH) apportés, d'une part, par le (ou les) précuseur(s) **A**' du (ou des) polymère(s) fonctionnalisé(s) **A** et, d'autre part, par le (ou les) précurseurs **B**' de la (ou des) résine(s) fonctionnalisée(s) **B**. Dans le cas préféré faisant appel à la lithine, on utilise de 0,005 à 0,5 moles de LiOH pour 1 mole de groupements silanols de **A'** ou **B'**.

La charge minérale **F** peut être constituée de silice amorphe sous forme d'un solide. L'état physique dans lequel se présente la silice est indifférent, c'est-à-dire que ladite charge peut se présenter sous forme de poudre, de microperles, de granulés ou de billes, dès lors que cette charge est suffisamment dispersée au sein des compositions selon la présente invention, de manière à atteindre l'objectif souhaité de translucidité. A titre de silice amorphe susceptible d'être mise en oeuvre dans l'invention, conviennent toutes les silices précipitées ou pyrogénées (ou silices de combustion) connues de l'homme de l'art. Bien entendu, on peut utiliser aussi des coupages de différentes silices. On préfère les silices de précipitation sous forme de poudre, les silices de combustion sous forme de poudre ou leurs mélanges ; leur surface spécifique BET est généralement supérieure à 40 m²/g et, de préférence, comprise ente 100 et 300 m²/g ; à titre plus préférentiel, on utilise les silices de combustion sous forme de poudre.

Selon une variante, la charge **F** peut être constituée, au-delà des silices, par des charges blanches opacifiantes, telles que des carbonates de calcium, des oxydes de titane ou d'aluminium, voire même par des noirs de fumées.

En pratique, les charges **F** peuvent se présenter sous la forme de produits minéraux et/ou organiques plus grossièrement divisés, de diamètre particulaire moyen supérieur à 0,1 micron ; parmi les charges préférées figurent le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, la poudre de liège, la sciure de bois, les phtalocyanines, les fibres minérales et organiques, les polymères organiques (polytétrafluoroéthylène, polyéthylène, polypropylène, polystyrène, polychlorure de vinyle).

Ces charges peuvent être modifiées en surface, et plus spécialement les charges d'origine minérale, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclo- polysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.
En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

En ce qui concerne le catalyseur de durcissement G, on peut mentionner, à titre d'exemples de symboles R⁴ dans les dérivés organiques du titane G1 de formule (G1), les radicaux : méthyle, éthyle, propyle, isopropyle, butyle, isobutyle, hexyle, éthyl-2 hexyle, octyle, décyle et dodécyle.

Comme exemples concrets de monomères **G1** de formule (G1), peuvent être cités : le titanate d'éthyle, le titanate de propyle, le titanate d'isopropyle, le titanate de butyle, le titanate d'éthyl-2-hexyle, le titanate d'octyle, le titanate de décyle, le titanate de dodécyle, le titanate de β-méthoxyéthyle, le titanate de β-éthoxyéthyle, le titanate de β-propoxyéthyle, le titanate de formule Ti[(OCH₂CH₂)₂OCH₃]₄. Les titanates monomères **G1** plus particulièrement appréciés sont les produits suivants, pris seuls ou en mélange: le titanate d'éthyle, le titanate de propyle, le titanate d'isopropyle, le titanate de butyle (n-butyle).

Comme exemples concrets de polymères **G2** provenant de l'hydrolyse partielle des titanates monomères, pouvent être cités : les polymères **G2** provenant de l'hydrolyse partielle des titanates d'isopropyle, de butyle ou d'éthyl-2 hexyle.

Les catalyseurs de réticulation/durcissement **G** peuvent également être choisis parmi les sels de métaux, et en particulier parmi les sels métalliques (zirconium, fer, plomb, manganèse par exemple) d'acides carboxyliques tels que par exemple les esters zirconiques (US-A-4,525,565), le stéarate de fer, et les octoates de plomb ou de zinc.

Selon une caractéristique préférée de l'invention, la composition POS de mastic monocomposant composant :
- 100 parties en poids de diorganopolysiloxane(s) linéaire(s) **A** fonctionnalisé(s) par R^{fo},
- 0 à 30, de préférence 5 à 15, parties en poids de résine(s) hydroxylée(s) **B**,
- 2 à 15, de préférence 3,5 à 7, parties en poids de réticulant(s) **C**,
- 0 à 30, de préférence de 5 à 20, parties en poids de diorganopolysiloxane(s) linéaire(s) non fonctionnalisé(s) et non réactif(s) **D,**
- 0,1 à 10, de préférence 1 à 5, parties en poids de biocide **E**,
- 2 à 40, de préférence 8 à 20, parties en poids de charge à base de silice et/ou de carbonate **F**,
- 0,3 à 5 de préférence 0,5 à 3 parties en poids de catalyseur de réticulation/durcissement **G**, et
- 0 à 20 parties en poids d'agent(s) auxiliaire(s) promoteur **H1,**
- 0 à 2 parties en poids d'agent(s) auxiliaire(s) **H2** constitué par un alcool(s).

Comme déjà indiqué supra, l'agent auxiliaire **H** peut être un promoteur d'adhérence **H1** éventuellement présent à hauteur de 0,1 à 10 parties en poids pour cent parties en poids de polymères **A** fonctionnalisés par des radicaux R^{fo}.

Ce promoteur d'adhérence **H1** est choisi parmi les composés organosiliciques portant à la fois :
- des groupes hydrolysables liés à l'atome de silicium, et
- des groupes organiques substitués par des radicaux choisis dans la famille des radicaux époxy et alcényle.

L'emploi d'un agent auxiliaire **H2** constitué par un alcool correspond à une forme préférée de mise en oeuvre du catalyseur de fonctionnalisation (en particulier la lithine) sous forme de solution alcoolique : l'alcool **H2** choisi peut être le méthanol, l'éthanol, l'isopropanol ou un mélange de ces alcools. Dans cette forme de réalisation la quantité de catalyseur de fonctionnalisation utilisée se situe dans l'intervalle allant de 0,1 à 2 parties en poids, et de préférence de 0,2 à 1 partie en poids, pour cent parties de polymère(s) fonctionnalisé(s) **A.**

D'autres agents auxiliaires et additifs **H** peuvent être incorporés à la composition selon l'invention ; ceux-ci sont choisis en fonction des applications dans lesquelles sont utilisées lesdites compositions.

La composition silicone monocomposante selon l'invention est avantageusement exempte de constituants susceptibles d'interagir avec les biocides de **E** judicieusement sélectionnés. Cela permet d'éviter la formation indésirable de coloration jaune, tout en garantissant l'absence de prolifération de bactéries, moisissures et champignons sur le mastic silicone appliqué dans des ambiances humides et chaudes. Ainsi, le mastic garde son aspect d'origine acceptable, par exemple translucide ou blanc. Cet acquis ne se fait pas au détriment de la stabilité au stockage en absence d'eau de la composition silicone fonctionnalisée, ni au détriment de sa capacité de réticuler en présence d'eau et à température ambiante pour former un mastic élastomère doté de propriétés mécaniques convenables et adhérant sur bon nombre de supports comme par exemple le bois, le verre, les métaux comme l'aluminium, les matières synthétiques comme le polyméthacrylate de méthyle, et les polycarbonates, les polyesters, les polychlorures de vinyle, les résines mélamine-formol, les résines époxy et les résines acrylonitrilebutadiènestyrène.

Les compositions conformes à l'invention durcissent à température ambiante et notamment à des températures comprises entre 5 et 35°C en présence d'humidité. Le durcissement (ou la réticulation) s'effectue de l'extérieur à l'intérieur de la masse des compositions. Il se forme d'abord, en surface, une peau puis la réticulation se poursuit dans la masse.

Ces compositions peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Selon un autre de ses aspects, la présente invention a également pour objet un élastomère non jaunissant susceptible d'adhérer sur différents substrats et obtenu par réticulation et durcissement de la composition de mastic silicone monocomposante décrite ci-dessus.

Les compositions organopolysiloxanes monocomposantes conformes à la présente invention sont préparées à l'abri de l'humidité en opérant dans un réacteur fermé, muni d'une agitation, dans lequel on peut au besoin faire le vide, puis remplacé éventuellement l'air chassé par un gaz inerte anhydre, par exemple par de l'azote.

Pour cette préparation, il est recommandé d'utiliser un appareillage, fonctionnant selon un mode discontinu ou un mode continu, qui permette :
- de brasser intimement, à l'abri de l'humidité : dans une étape 1, les constituants suivants : POS **A**' hydroxylé précurseur du POS **A** fonctionnalisée R^{fo}, résine **B**' hydroxylée précurseur de la résine POS **B** fonctionnalisée R^{fo}, résine **C**, catalyseur de fonctionnalisation, POS non fonctionnalisé et non réactif **D** (facultatif) ; puis dans une étape 2, le mélange réactionnel de l'étape 1 complété par l'ajout des constituants **F**, **G**, biocide **E** et additif **H1** (facultatif) ; et
- d'évacuer dans une étape 3 les matières volatiles présentes (polymères de bas poids moléculaires, alcool formé au cours de la réaction de fonctionnalisation, alcool **H2** éventuellement utilisé).

A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.

Chacune des étapes mises en oeuvre dans cette préparation est conduite à une température se situant dans l'intervalle allant de 10 à 110°C. De préférence, chacune des étapes est conduite à une température allant de 15 à 90°C.

L'étape 1 est conduite pendant une période de temps suffisante (allant par exemple de 10 secondes à 10 minutes) pour réaliser une réaction de fonctionnalisation complète ou le plus proche possible du degré maximal de fonctionnalisation accessible dans les conditions opératoires choisies.

L'étape 2 est conduite pendant une période de temps suffisante (allant par exemple de 10 secondes à 30 minutes) pour arriver à des compositions homogènes.

L'étape 3 est conduite généralement sous une pression réduite comprise entre 20.10²Pa et 900.10² Pa, pendant une période de temps suffisante (allant par exemple de 10 secondes à 1 heure) pour évacuer toutes les matières volatiles.

L'invention sera mieux comprise à l'aide des exemples qui suivent qui décrivent la préparation de formules de mastics neutres de type oxime ou alcoxy comportant des antifongiques et présentant ou non des propriétés avantageuses de non-jaunissement et de stabilité et conduisant à des élastomères réticulés ayant de bonnes qualités mécaniques, selon qu'ils répondent ou non à la présente invention.

### EXEMPLES

Dans ces exemples, on prépare et on évalue en termes de jaunissement et de propriétés mécaniques (dureté Shore) trois formules de compositions de mastics silicones monocomposants :
(1) neutres (oxime) translucides: exemple comparatif 1;
(2) neutres alcoxy chargés: exemple comparatif 2;
(3) et neutres alcoxy translucides: exemple 3 selon l'invention.

Seul le mastic de l'exemple 3 satisfait pleinement aux propriétés attendues de stabilité au stockage, de non-jaunissement, et d'efficacité bactéricide et fongicide.
Les antifongiques qui ont été sélectionnés conformément à l'invention, (efficaces et ayant un profil toxicologique favorable selon les nouvelles réglementations sur les biocides), sont les suivants :
➢ N-octyl-isothiazoline-3-one (Ecoplast PA20 de Progiven, Vinyzène IT3020 DOP de Rhom et Haas...),
➢ di-chloro-N-octyl-isothiazoline-3-one (Ecoplast T20 de Progiven, Kathon 910SB de Rhom et Haas...),
➢ N-butyl-benzisothiazoline-3-one (Vanquish 100 d'Avecia),
➢ 2-(4-thiazolyl) benzimidazol (TK100,),
➢ diiodiométhyl-p-tolyl-sulfone (Amical 48 de Angus),
➢ lodo-propynyl N-butylcarbamate (Bionyl A-285 de Troy, IBF8DOP de Akzo ...).

### Exemple comparatif 1 : mastics oxime translucides

### Préparation A : témoin sans antifongique

Dans un mélangeur tripale de 1,5 litres, charger 600 g d'huile polydiméthylsiloxane α,ω hydroxylée de viscosité 80 000 mPa.s, 249,75 g d'huile 47V1000. Mélanger puis ajouter le mélange de 38,4g de méthyloxime avec 4,7 g de vinyloxime. Mélanger pendant 10 min. Introduire progressivement 90,3 g de silice de combustion et mélanger. Puis, ajouter 19,8 g de aminopropyl tri-éthoxy silane (= silane AMEO de Degussa-Huels) et 0,3 g de catalyseur diacétate de dibutyl étain. Agiter quelques minutes sous vide.

### Préparation B :

Préparation identique à A en rajoutant à la fin (avec le silane) 1 g de TK100 de la société Chemviron (soit 0,1 % en poids).

### Préparation C :

Préparation identique à A en rajoutant à la fin 4 g de Vinyzène IT 3020 DOP de la société Rhom et Haas (soit environ 0,4 % en poids).

### Préparation D :

Préparation identique à A en rajoutant à la fin 1 g d'Amical 48 de la société Angus (soit environ 0,1 % en poids).
Les résultats sont donnés dans le tableau 1 ci-dessous.

**Tableau 1 :**

| | A : témoin | B | C | D |
|---|---|---|---|---|
| Antifongique | Sans | TK100 | Vinyzène IT 3020 DOP | Amical 48 |
| Dureté Shore A initiale * | 16 | 17 | 16 | 17 |
| Dureté Shore A * vieilli 7 jours 70°C | 14 | 15 | 9 | 13 |
| Indice de jaune initial** | - 1,75 | 0,33 | - 0,49 | 0,22 |
| Indice de jaune** vieilli 7 jours à 100°C | 5,2 | 12,2 | 15,3 | 17,2 |

| | | | | |
|---|---|---|---|---|
| * en 3 épaisseurs de 2 mm, après 7 jours de réticulation à 23°C et 50 % H.R. ** Mesuré au spectrocolorimètre (Y1925, films de 2 mm, après 7 jours de réticulation à 23°C et 50 % H.R.) | | | | |

### Exemple comparatif 2 : mastics alcoxy chargé

### Préparation E : témoin sans antifongique

Dans un mélangeur tripale de 1,5 litres, charger 630 g d'huile polydiméthylsiloxane α,ω hydroxylée de viscosité 135 000 mPa.s, 210 g d'huile 47V1000. Mélanger puis ajouter 30 g de vinyltriméthoxysilane. Mélanger puis ajouter 3,8 g de catalyseur de fonctionnalisation (LiOH, H2O à 4 % dans le méthanol). Introduire progressivement 60 g de silice de combustion et mélanger, puis 720 g de carbonate de calcium BLR3 de OMYA. Mélanger et ajouter un mélange de 8,2 g de β-aminoéthyl γ-aminopropyl méthyldiméthoxy silane (= silane 1411 de Huels), de 0,36 g de catalyseur 2021* et 4,5 g de Bréox B-225 de la société INSPEC. Agiter quelques minutes sous vide.
* Catalyseur 2021 = mélange équimolaire de dilaurate de dibutyl étain et de bisacétylacétonate de dibutyl étain.

### Préparation F : Vinvzène IT 3020 DOP

Préparation identique à l'essai témoin E, en rajoutant après l'addition du carbonate BLR3, 8,3 g d'antifongique Vinyzène IT 3020 DOP (soit environ 0,5 % en poids).

### Préparation G : Amical 48

Préparation identique à l'essai témoin E, en rajoutant après l'addition du carbonate BLR3, 3,4 g d'antifongique Amical 48 (soit environ 0,2 % en poids).

Les résultats sont donnés dans le tableau 2 ci-dessous :

**Tableau 2 :**

| | E : témoin | F | G |
|---|---|---|---|
| Antifongique | Sans | Vinyzène IT 3020 DOP | Amical 48 |
| Dureté Shore A initiale * | 20 | Non réticulé | 14 |
| Dureté Shore A * vieilli 1 jours 100°C | 17 | Non réticulé | 10 |

| | | | |
|---|---|---|---|
| * en 3 épaisseurs de 2 mm, après 7 jours de réticulation à 23°C et 50 % H.R. | | | |

### Exemple 3 : mastics alcoxy selon l'invention

### Préparation H : témoin sans antifongique

Dans un mélangeur tripale de 1,5 litres, charger 587 g d'huile polydiméthylsiloxane α,ω hydroxylée de viscosité 135 000 mPa.s, 150 g d'huile 47V100, 40 g de 47V100 000 et 66 g de résine MDTOH. Mélanger puis ajouter 30 g de vinyltriméthoxysilane. Mélanger puis ajouter 3,8 g de catalyseur de fonctionnalisation (LiOH, H2O à 4 % dans le méthanol). Introduire progressivement 95 g de silice de combustion traitée D4 et mélanger. Ajouter 15g de méthacryloxypropyl-triméthoxysilane et 13 g de titanate de butyle. Agiter quelques minutes sous vide.

### Préparation I : Vanquish 100

Préparation identique à l'essai témoin H, en rajoutant à la fin de la préparation, 2 g d'antifongique de Vanquish 100 (soit environ 0,2 % en poids).

### Préparation J : Ecoplast PA20

Préparation identique à l'essai témoin H, en rajoutant à la fin de la préparation, 6,8 g d'antifongique Ecoplast PA20 (soit environ 0,68 % en poids).

### Préparation K : Ecoplast T20

Préparation identique à l'essai témoin H, en rajoutant à la fin de la préparation, 6 g d'antifongique Ecoplast T20 (soit environ 0,6 % en poids).

### Préparation L : IBF8DOP

Préparation identique à l'essai témoin H, en rajoutant après, 15 g d'antifongique (soit environ 1,5 % en poids).

Les résultats sont donnés dans le tableau 3 ci-dessous.

**Tableau 3 :**

| | | | | | | |
|---|---|---|---|---|---|---|
| | H: témoin | I | J | K | L | M |
| Antifongique | Sans | Vanquish 100 | Ecoplast PA 20 | Ecoplast T20 | Kathon 910 SB | IBF8DOP |
| Dureté Shore A initiale * | 21 | 21 | 20 | 21 | 20,5 | 20,5 |
| Dureté Shore A * vieilli 15 jours 50°C | 17,5 | 17 | 16,5 | 17,5 | 17 | 17,5 |
| Indice de jaune initial** | -2,5 | -1,6 | -1,9 | -1,8 | -2,2 | -2,2 |
| Indice de jaune** vieilli 10 jours à 70°C | 4,1 | 3,9 | 4,2 | 2,9 | 3,9 | 3,8 |

| | | | | | | |
|---|---|---|---|---|---|---|
| * en 3 épaisseurs de 2 mm chacune, après 7 jours de réticulation à 23°C et 50 % H.R. ** Mesuré au spectrocolorimètre (Y1925, films de 2 mm, après 7 jours de réticulation à 23°C et 50 % H.R.) | | | | | | |

Ces compositions permettent d'obtenir des mastics avec une activité bactéricide et antifongique importante, ne jaunissant pas et dont la stabilité au stockage est satisfaisante.

## Revendications

1. Composition polyorganosiloxane (POS) monocomposante, stable au stockage en absence d'humidité et réticulant, en présence d'eau, en élastomère, non jaunissant et adhérent, **caractérisée** :
* en qu'elle est exempte d'agent nucléophile (notamment aminé) ou en contient en quantité inférieure à 1000 ppm de préférence à 500 ppm par rapport à la composition totale ;
* et en ce qu'elle comprend :
-A- au moins un polyorganopolysiloxane linéaire réticulable **A** de formule: 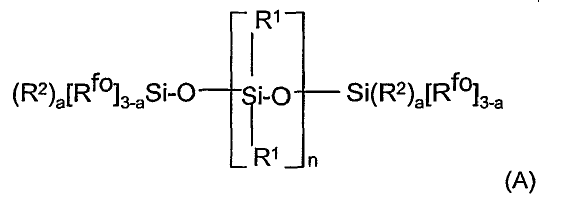 dans laquelle :
- les substituants R¹, identiques ou différents, représentent chacun un radical monovalent hydrocarboné saturé ou non en C₁ à C₁₃, substitué ou non substitué, aliphatique, cyclanique ou aromatique ;
- les substituants R², identiques ou différents, représentent chacun un radical monovalent hydrocarboné saturé ou non en C₁ à C₁₃, substitué ou non substitué, aliphatique, cyclanique ou aromatique ;
- les substituants de fonctionnalisation R^{fo}, identiques ou différents, représentent chacun :
• un reste oxime de formule :
(R³)₂ C^{‗} N-O-
avec R³ représentant indépendamment, un alkyle linéaire ou ramifié en C₁ à C₈ ; un cycloalkyle en C₃ à C₈, un alcényle en C₂-C₈,
• un reste alcoxy de formule :
OR⁴(CH₂CH₂O)_{b}-
avec R⁴ représentant indépendamment un alkyle linéaire ou ramifié en C₁ à C₈ ; un cycloalkyle en C₃ à C₈ et b = 0 ou 1;
• un reste acyle de formule : 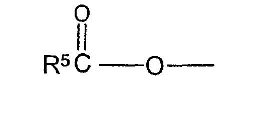 avec R⁵ représentant un radical monovalent hydrocarboné saturé ou non en C₁ à C₁₃, substitué ou non substitué, aliphatique, cyclanique ou aromatique,
- n a une valeur suffisante pour conférer au POS **A** une viscosité dynamique à 25°C allant de 1.000 à 1.000.000 mPa.s ;
- a est zéro ou 1 ;
-B- éventuellement au moins une résine polyorganosiloxane **B** fonctionnalisée par au moins un radical R^{fo} répondant à la définition donnée supra et présentant, dans sa structure, au moins deux motifs différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule (**A**), ladite résine ayant une teneur pondérale en radicaux fonctionnels R^{fo} allant de 0,1 à 10 %, étant entendu qu'une partie des radicaux R¹ sont des radicaux R^{fo} ;
-C- éventuellement au moins un réticulant **C** de formule:
(R²)ₐSi [R^{fo}]₄₋ₐ
avec R², R^{fo} et a étant tels que définis ci-dessus,
-D- éventuellement au moins un polydiorganosiloxane **D** linéaire non réactif et non fonctionnalisé R^{fo} et de formule : 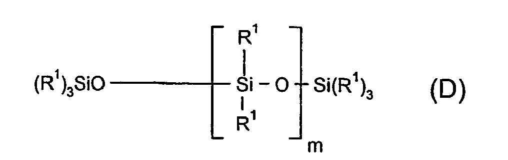 dans laquelle :
- les substituants R¹, identiques ou différents, ont les mêmes significations que celles données ci-avant pour le polyorganosiloxane **A** de formule (**A**) ;
- m a une valeur suffisante pour conférer au polymère de formule (D) une viscosité dynamique à 25°C allant de 10 à 200.000 mPa.s ;
-E- au moins un biocide **E** choisi dans le groupe comprenant N-octylisothiazoline-3-one, di-chloro-N-octyl-isothiazoline-3-one, N-butylbenzisothiazoline-3-one, lodo-propynyl-N-butylcarbamate et leurs mélanges;
-F- une charge minérale **F**, de préférence à base de silice et/ou de carbonate;
-G- une quantité efficace d'un catalyseur de réticulation/durcissement **G** choisi parmi:
- les sels de métaux choisis dans le groupe comprenant : Sn, Zn, Fe, Pb, Ba, Mn et Zr, de préférence sous forme de monocarboxylates et/ou de dicarboxylates,
- les dérivés organiques du titane,
- et leurs mélanges;
-H- éventuellement au moins un agent auxiliaire **H** non nucléophile, de préférence non aminé.

2. Composition POS selon la revendication 1, **caractérisée en ce que** les substituants de fonctionnalisation R^{fo} des formules **A**, **B** et **C** identiques ou différents, représentent chacun :
• un reste oxime de formule :
(R³)₂ C^{‗}N-O-
avec R³ représentant indépendamment, un alkyle linéaire ou ramifié en C₁ à C₈ ; un cycloalkyle en C₃ à C₈, un alcényle en C₂-C₈, de préférence sélectionné dans le groupe comprenant : méthyle, éthyle, propyle, butyle, vinyle, allyle;
• et/ou un reste alcoxy de formule :
OR⁴(CH₂CH₂O)_{b}-
avec R4 représentant indépendamment, un alkyle linéaire ou ramifié en C₁ à C₈ ; un cycloalkyle en C₁ à C₈, de préférence sélectionné dans le groupe comprenant : méthyle, éthyle, propyle, butyle et méthyglycol, et b = 0 ou 1.

3. Composition POS selon la revendication 1 ou 2, **caractérisée en ce que** les substituants de fonctionnalisation R^{fo} sont de type alcoxy et répondent à la formule OR⁴(CH₂CH₂O)_{b}-, telle que définie dans les revendications précédentes et **en ce que** le catalyseur de réticulation/durcissement **G** comprend au moins un sel d'acide carboxylique de Zr, Fe, Pb, Ba ou Mn et/ou au moins un dérivé organique du titane choisi dans le groupe constitué par :
+ des monomères **G1** de formule :
Ti[(OCH₂CH₂)_{c} OR⁷]₄ (**G1**)
dans laquelle :
- les substituants R⁷, identiques ou différents, représentent chacun un radical alkyle, linéaire ou ramifié, en C₁ à C₁₂ ;
- c représente zéro, 1 ou 2 ;
- avec les conditions selon lesquelles, quand le symbole c représente zéro, le radical alkyle R⁷ possède de 2 à 12 atomes de carbone, et quand le symbole c représente 1 ou 2, le radical alkyle R⁷ possède de 1 à 4 atomes de carbone ;
+ des polymères **G2** découlant de l'hydrolyse partielle des monomères de formule **(G1)** dans laquelle le symbole R⁷ a la signification précitée avec le symbole c représentant zéro.

4. Composition POS selon l'une quelconque des revendications 1 à 3, **caractérisée en ce qu'**elle comprend au moins un promoteur d'adhérence **H1** non nucléophile en particulier et non aminé, de préférence choisi parmi les composés organosiliciques portant à la fois :
(1) des groupes hydrolysables liés à l'atome de silicium et
(2) des groupes organiques substitués par des radicaux choisis dans le groupe des radicaux (méth)acrylate, époxy, et alcényle, et plus préférentiellement encore dans le groupe comportant :
- le vinyltriméthoxysilane (VTMS),
- le 3-Glycidoxypropyl-triméthoxysilane (GLYMO),
- le méthacryloxypropyltriméthoxysilane (MEMO),
- et leur mélanges.

5. Composition POS selon l'une quelconque des revendications 1 à 4, **caractérisée en ce que** les substituants R¹ des polymères POS **A** fonctionnalisés, des résines **B** fonctionnalisées R^{fo} et des polymères facultatifs non fonctionnalisés et non réactifs **D** sont sélectionnés dans le groupe formé par :
- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone, les radicaux méthyle, éthyle, propyle, isopropyle, n-hexyle, phényle, vinyle et 3,3,3-trifluoropropyle étant particulièrement préférés.

6. Composition POS selon l'une quelconque des revendications 1 à 5, **caractérisée en ce que** les réticulants silane **C** porteurs des radicaux de fonctionnalisation R^{fo} sont choisis parmi :
Si(OC₂H₅)₄, CH₃Si(OCH₃)₃, CHgSi(OC₂H₅)₃, (C₂H₅O)₃Si(OCH₃),
(CH₂=CH)Si(OCH₃)₃, (CH₂=CH)Si(OC₂H₅)₃.

7. Composition POS selon l'une quelconque des revendications 1 à 6,
**caractérisée en ce que** l'on utilise un catalyseur de fonctionnalisation choisi dans le groupe comprenant :
- l'acétate de potassium (cf. US-A-3 504 051),
- les oxydes minéraux divers (cf. FR-A-1 495 011),
- les carbamates (cf. EP-A-0 210 402),
- la lithine (cf. EP-A-0 367 696),
- la soude ou la potasse (cf. EP-A-0 457 693),
la lithine de formule LiOH ou LiOH, H₂O étant plus spécialement recommandée.

8. Composition POS selon l'une quelconque des revendications 1 à 7, **caractérisée en ce qu'**elle comprend :
- 100 parties en poids de diorganopolysiloxane(s) linéaire(s) **A** fonctionnalisé(s) par R^{fo},
- 0 à 30, de préférence 5 à 15, parties en poids de résine(s) hydroxylée(s) **B**,
- 2 à 15, de préférence 3,5 à 7, parties en poids de réticulant(s) **C**,
- 0 à 30, de préférence de 5 à 20, parties en poids de diorganopolysiloxane(s) linéaire(s) non fonctionnalisés et non réactif(s) **D**,
- 0,1 à 10, de préférence 1 à 5, parties en poids de biocide **E**,
- 2 à 40, de préférence 8 à 20, parties en poids de charge à base de silice et/ou de carbonate **F**,
- 0,3 à 5, de préférence 0,5 à 3, parties en poids de catalyseur de réticulation/durcissement **G**, et
- 0 à 20 parties en poids d'agent(s) auxiliaire(s) promoteur **H1**,
- 0 à 2 parties en poids d'agent(s) auxiliaire(s) **H2** constitué par un alcool(s).

9. Elastomère non jaunissant susceptible d'adhérer sur différents substrats et obtenu par réticulation et durcissement de la composition selon l'une quelconque des revendications 1 à 8.

## Claims

1. One-pack polyorganosiloxane (POS) composition, which is stable on storage in the absence of moisture and which crosslinks, in the presence of water, to a non-yellowing and adhesive elastomer, **characterized**:
* in that it is free of nucleophilic agent (especially amine agent) or contains such an agent in an amount of less than 1000 ppm and preferably less than 500 ppm relative to the total composition;
* and in that it comprises:
-A- at least one crosslinkable linear polyorganopolysiloxane **A** of formula: 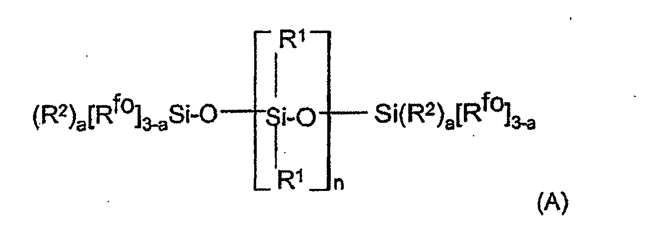 in which:
- the substituents R¹, which may be identical or different, each represent a saturated or unsaturated, substituted or unsubstituted, aliphatic, cyclanic or aromatic C₁ to C₁₃ monovalent hydrocarbon-based radical;
- the substituents R², which may be identical or different, each represent a saturated or unsaturated, substituted or unsubstituted, aliphatic, cyclanic or aromatic C₁ to C₁₃ monovalent hydrocarbon-based radical;
- the functionalizing substituents R^{fo}, which may be identical or different, each represent:
• an oxime residue of formula:
(R³)₂ C^{‗}N-O-
with R³ representing, independently, a linear or branched C₁ to C₈ alkyl; a C₃ to C₈ cycloalkyl, a C₂-C₈ alkenyl,
• an alkoxy residue of formula:
OR⁴(CH₂CH₂O)_{b}-
with R⁴ representing, independently, a linear or branched C₁ to C₈ alkyl; a C₃ to C₈ cycloalkyl and b = 0 or 1;
• an acyl residue of formula: 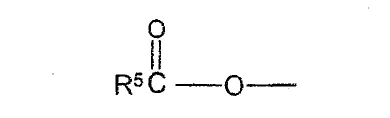 with R⁵ representing a saturated or unsaturated, substituted or unsubstituted, aliphatic, cyclanic or aromatic C₁ to C₁₃ monovalent hydrocarbon-based radical,
- n has a value sufficient to give the POS **A** a dynamic viscosity at 25°C ranging from 1000 to 1 000 000 mPas.s;
- a is 0 or 1;
-B- optionally at least one polyorganosiloxane resin **B** functionalized with at least one radical R^{fo} corresponding to the definition given above and having, in its structure, at least two different units chosen from those of formulae (R¹)₃SiO_{1/2} (unit M), (R¹)₂SiO_{2/2} (unit D), R¹SiO_{3/2} (unit T) and SiO₂ (unit Q), at least one of these units being a unit T or Q, the radicals R¹, which may be identical or different, having the meanings given above with regard to formula (**A**), the said resin having a weight content of functional radicals R^{fo} ranging from 0.1% to 10%, it being understood that some of the radicals R¹ are radicals R^{fo};
-C- optionally at least one crosslinking agent **C** of formula:
(R²)ₐSi [R^{fo}]₄₋ₐ
with R², R^{fo} and a being as defined above,
-D- optionally at least one non-reactive and non-functionalized linear polydiorganosiloxane **D** of formula: 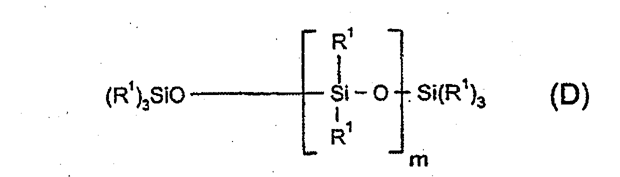 in which:
- the substituents R¹, which may be identical or different, have the same meanings as those given above for the polyorganosiloxane **A** of formula (**A**);
- m has a value sufficient to give the polymer of formula (**D**) a dynamic viscosity at 25°C ranging from 10 to 200 000 mPa.s;
-E- at least one biocidal agent **E** chosen from the group comprising N-octylisothiazolin-3-one, dichloro-N-octylisothiazolin=3-one, N-butylbenzisothiazolin-3-one and iodopropynyl-N-butylcarbamate and mixtures thereof;
-F- a mineral filler **F**, preferably based on silica and/or carbonate;
-G- a sufficient amount of a crosslinking/curing catalyst **G** chosen from:
- salts of metals chosen from the group comprising: Sn, Zn, Fe, Pb, Ba, Mn and Zr, preferably in the form of monocarboxylates and/or dicarboxylates,
- organotitanium derivatives, and
- mixtures thereof;
-H- optionally at least one non-nucleophilic and preferably non-amine auxiliary agent **H**.

2. POS composition according to Claim 1, **characterized in that** the functionalizing substituents R^{fo} of formulae **A**, **B** and **C**, which may be identical or different, each represent:
• an oxime residue of formula:
(R³)₂ C^{‗}N-O-
with R³ independently representing a linear or branched C₁ to C₈ alkyl; a C₃ to C₈ cycloalkyl; a C₂-C₈ alkenyl, preferably selected from the group consisting of: methyl, ethyl, propyl, butyl, vinyl, allyl;
• and/or an alkoxy residue of formula:
OR⁴(CH₂CH₂O)_{b}-
with R⁴ independently representing a linear or branched C₁ to C₈ alkyl; a C₁ to C₈ cycloalkyl, preferably selected from the group comprising: methyl, ethyl, propyl, butyl and methylglycol, and b = 0 or 1.

3. POS composition according to Claim 1 or 2, **characterized in that** the functionalizing substituents R^{fo} are of alkoxy type and correspond to the formula OR⁴(CH₂CH₂O)_{b}-, as defined in the preceding claims, and **in that** the crosslinking/curing catalyst **G** comprises at least one carboxylic acid salt of Zr, Fe, Pb, Ba or Mn and/or at least one organotitanium derivative chosen from the group consisting of:
+ monomers **G1** of formula:
Ti[(OCH₂CH₂)_{c} OR⁷]₄ (**G1**)
in which:
- the substituents R⁷, which may be identical or different, each represent a linear or branched C₁ to C₁₂ alkyl radical;
- c represents 0, 1 or 2;
- with the conditions according to which, when the symbol c represents 0, the alkyl radical R⁷ contains from 2 to 12 carbon atoms, and when the symbol c represents 1 or 2, the alkyl radical R⁷ contains from 1 to 4 carbon atoms;
+ polymers **G2** resulting from the partial hydrolysis of the monomers of formula **(G1)** in which the symbol R⁷ has the abovementioned meaning with the symbol c representing 0.

4. POS composition according to any one of Claims 1 to 3, **characterized in that** it comprises at least one non-nucleophilic and in particular non-amino adhesion promoter **H1**, preferably chosen from organosilicon compounds bearing both:
(1) hydrolysable groups linked to the silicon atom, and
(2) organic groups substituted with radicals chosen from the group of (meth)acrylate, epoxy and alkenyl radicals, and even more preferentially from the group comprising:
- vinyltrimethoxysilane (VTMS)
- 3-glycidoxypropyltrimethoxysilane (GLYMO),
- methacryloxypropyltrimethoxysilane (MEMO), and
- mixtures thereof.

5. POS composition according to any one of Claims 1 to 4, **characterized in that** the substituents R¹ of the functionalized POS polymers **A,** of the R^{fo}-functionalized resins **B** and of the optional non-functionalized and non-reactive polymers **D** are selected from the group formed by:
- alkyl and haloalkyl radicals containing from 1 to 13 carbon atoms,
- cycloalkyl and halocycloalkyl radicals containing from 5 to 13 carbon atoms,
- alkenyl radicals containing from 2 to 8 carbon atoms,
- mononuclear aryl and haloaryl radicals containing from 6 to 13 carbon atoms,
- cyanoalkyl radicals in which the alkyl chain units contain from 2 to 3 carbon atoms,
methyl, ethyl, propyl, isopropyl, n-hexyl, phenyl, vinyl and 3,3,3-trifluoropropyl radicals being particularly preferred.

6. POS composition according to any one of Claims 1 to 5, **characterized in that** the silane crosslinking agents **C** bearing functionalizing radicals R^{fo} are chosen from:
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, (CH₂=CH)Si(OC₂H₅)₃.

7. POS composition according to any one of Claims 1 to 6, **characterized in that** the functionalizing catalyst used is chosen from the group comprising:
- potassium acetate (cf. US-A-3 504 051),
- various mineral oxides (cf. FR-A-1 495 011),
- carbamates (cf. EP-A-0 210 402),
- lithium hydroxide (cf. EP-A-0 367 696),
- sodium hydroxide or potassium hydroxide (cf. EP-A-0 457 693),
lithium hydroxide of formula LiOH or LiOH·H₂O being more especially recommended.

8. POS composition according to any one of Claims 1 to 7, **characterized in that** it comprises:
- 100 parts by weight of linear diorganopolysiloxane(s) **A** functionalized with R^{fo},
- 0 to 30 and preferably 5 to 15 parts by weight of hydroxylated resin(s) **B**,
- 2 to 15 and preferably 3.5 to 7 parts by weight of crosslinking agent(s) **C**,
- 0 to 30 and preferably from 5 to 20 parts by weight of non-functionalized and unreactive linear diorganopolysiloxane(s) **D**,
- 0.1 to 10 and preferably 1 to 5 parts by weight of biocidal agent **E**,
- 2 to 40 and preferably 8 to 20 parts by weight of silica-based and/or carbonate-based filler **F**,
- 0.3 to 5 and preferably 0.5 to 3 parts by weight of crosslinking/curing catalyst **G**,
- 0 to 20 parts by weight of auxiliary promoter(s) **H1,** and
- 0 to 2 parts by weight of auxiliary agent(s) **H2** consisting of alcohol(s).

9. Non-yellowing elastomer capable of adhering to various substrates and obtained by crosslinking and curing of the composition according to any one of Claims 1 to 8.

## Patentansprüche

1. Einkomponenten-Polyorganosiloxan(POS)-Zusammensetzung, die bei Lagerung in Abwesenheit von Feuchtigkeit stabil, in Gegenwart von Wasser zum Elastomer vernetzend, nicht vergilbend und anhaftend ist, **dadurch gekennzeichnet, dass** sie
* frei von nukleophilen (insbesondere aminierten) Mittel ist oder eine Menge davon unter 1000 ppm, bevorzugt unter 500 ppm im Verhältnis zur Gesamtzusammensetzung enthält,
* und umfasst:
-A- mindestens ein vernetzbares lineares Polyorganopolysiloxan A mit der Formel: 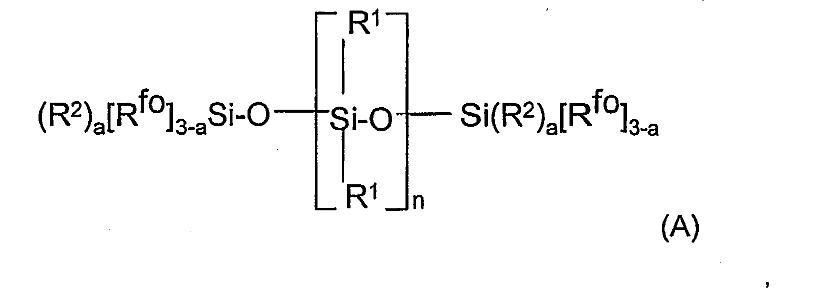 wobei:
- die Substituenten R¹ identisch oder unterschiedlich sind und ein jeder einen einwertigen, C₁ bis C₁₃ gesättigten oder ungesättigten, substituierten oder unsubstituierten, aliphatischen, Cykloalkyl- oder aromatischen Kohlenwasserstoffrest darstellt;
- die Substituenten R² identisch oder unterschiedlich sind und ein jeder einen einwertigen, C₁ bis C₁₃ gesättigten oder ungesättigten, substituierten oder unsubstituierten, aliphatischen, Cykloalkyl- oder aromatischen Kohlenwasserstoffrest darstellt;
- die Substituenten mit einer Funktionalisierung R^{fo} identisch oder unterschiedlich sind und ein jeder darstellt:
• einen Oximrest der Formel:
(R³)₂C=N-O-,
wobei R³ unabhängig einen linearen oder verzweigten C₁ bis C₈ Alkylrest, einen C₃ bis C₈ Cycloalkylrest, einen C₂-C₈ Alkenylrest darstellt,
• einen Alcoxyrest der Formel:
OR⁴(CH₂CH₂O)_{b}-,
wobei R⁴ unabhängig einen linearen oder verzweigten C₁ bis C₈ Alkylrest, oder einen C₃ bis C₈ Cycloalkylrest darstellt und b = 0 oder 1 ist;
• einen Acylrest der Formel: 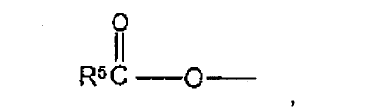
wobei R⁵ einen einwertigen, C₁ bis C₁₃ gesättigten oder ungesättigten, substituierten oder unsubstituierten, aliphatischen, Cykloalkyl- oder aromatischen Kohlenwasserstoffrest darstellt,
- n einen ausreichenden Wert besitzt, um dem POS A eine dynamische Viskosität bei 25°C zu verleihen, die von 1.000 bis 1.000.000 mPa·s reicht;
- a null oder 1 ist;
-B- möglichenfalls wenigstens ein Polyorganosiloxanharz B, das funktionalisiert ist durch wenigstens einen Rest R^{fo}, der der oben angegebenen Definition entspricht und in seiner Struktur wenigstens zwei unterschiedliche Einheiten aufweist, die aus denen mit den Formeln (R¹)₃SiO_{1/2} (Einheit M), (R¹)₂SiO_{2/2} (Einheit D), R¹SiO_{3/2} (Einheit T) und SiO₂ (Einheit Q) ausgewählt sind, wobei eine dieser Einheiten wenigstens eine Einheit T oder Q ist, und die Reste R¹ identisch oder unterschiedlich sind und die oben bezüglich der Formel (A) angegebenen Bedeutungen haben, wobei das Harz einen Gewichtsanteil an funktionellen Resten R^{fo} von 0,1 bis 10 % besitzt, wobei klar ist, dass ein Teil der Reste R¹ R^{fo}-Reste sind;
-C- möglichenfalls wenigstens ein Vernetzungsmittel C der Formel:
(R²)ₐSi[R^{fo}]₄₋ₐ,
wobei R², R^{fo} und a wie oben definiert sind;
-D- möglichenfalls wenigstens ein lineares, nichtreaktives und nicht R^{fo}-funktionalisiertes Polydiorganosiloxan D der Formel: 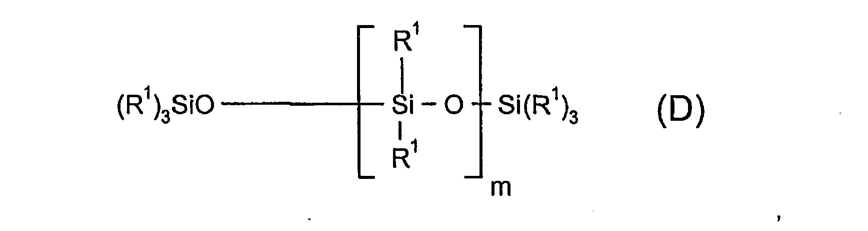 wobei
- die Substituenten R¹ identisch oder unterschiedlich sind und dieselben Bedeutungen wie die oben für das Polyorganosiloxan A der Formel (A) angegebenen haben;
- m einen ausreichenden Wert besitzt, um dem Polymer der Formel (D) eine dynamische Viskosität bei 25°C zu verleihen, die von 10 bis 200.000 mPa·s reicht;
-E- wenigstens ein Biozid E, das aus der Gruppe ausgewählt ist, die N-Octyl-Isothiazolin-3-on, Di-Chlor-N-Octyl-Isothiazolin-3-on, N-Butylbenzisothiazolin-3-on, Iodo-Propynyl-N-Butylcarbamat und ihre Gemische umfasst;
-F- einen mineralischen Füllstoff F, vorzugsweise auf der Basis von Kieselsäure und/oder Carbonat;
-G- eine wirksame Menge eines Vernetzungs-/Härtungskatalysators G, der ausgewählt ist aus:
- Metallsalzen, die aus der aus Sn, Zn, Fe, Pb, Ba, Mn und Zr bestehenden Gruppe ausgewählt sind, bevorzugt in Form von Monocarboxylaten und/oder Dicarboxylaten,
- organischen Derivaten des Titans,
- und deren Gemischen;
-H- möglichenfalls wenigstens ein nicht nukleophiles, bevorzugt nicht aminiertes Hilfsmittel H.

2. POS-Zusammensetzung nach Anspruch 1 **dadurch gekennzeichnet, dass** die Substituenten mit einer Funktionalisierung R^{fo} der Formeln A, B und C identisch oder unterschiedlich sind und ein jeder darstellt:
• einen Oximrest der Formel:
(R³)₂C=N-O-,
wobei R³ unabhängig ein lineares oder verzweigtes C₁ bis C₈ Alkyl, ein C₃ bis C₈ Cycloalkyl, ein C₂-C₈ Alkenyl darstellt und vorzugsweise aus der aus Methyl, Ethyl, Propyl, Butyl, Vinyl, Allyl bestehenden Gruppe ausgewählt ist,
• und/oder einen Alcoxyrest der Formel:
OR ⁴(CH₂CH₂O)_{b}-,
wobei R⁴ unabhängig ein lineares oder verzweigtes C₁ bis C₈ Alkyl, ein C₁ bis C₈ Cycloalkyl darstellt und vorzugsweise aus der aus Methyl, Ethyl, Propyl, Butyl und Methylglykol bestehenden Gruppe ausgewählt und b = 0 oder 1 ist.

3. POS-Zusammensetzung nach Anspruch 1 oder 2 **dadurch gekennzeichnet, dass** die Substituenten mit einer Funktionalisierung R^{fo} vom Alcoxytyp sind und der Formel OR⁴(OCH₂CH₂)_{b} entsprechen, wie sie in den vorhergehenden Ansprüchen definiert ist, und dass der Vernetzungs-/Härtungskatalysator G wenigstens ein Salz der Carbonsäure von Zr, Fe, Pb, Ba oder Mn und/oder wenigstens ein organisches Derivat des Titans umfasst, das aus der Gruppe ausgewählt ist, die gebildet wird durch:
+ Monomere G1 der Formel:
Ti[(OCH₂CH₂)_{c}OR⁷]₄ , (G1)
wobei
- die Substituenten R⁷ identisch oder unterschiedlich sind und ein jeder ein lineares oder verzweigtes C₁ bis C₁₂ Alkyl darstellt;
- c null, 1 oder 2 ist;
- mit der Bedingung, dass, wenn das Symbol c null darstellt, der Alkylrest R⁷ 2 bis 12 C-Atome besitzt, und wenn das Symbol c 1 oder 2 darstellt, der Alkylrest R⁷ 1 bis 4 C-Atome besitzt;
+ Polymere G2, die sich aus der teilweisen Hydrolyse der Monomere der Formel (G1) ergeben, wobei das Symbol R⁷ die vorerwähnte Bedeutung hat und das Symbol c gleich null ist.

4. POS-Zusammensetzung nach einem der Ansprüche 1 bis 3 **dadurch gekennzeichnet, dass** sie wenigstens einen Adhäsionspromotor H1 umfasst, der insbesondere nicht nukleophil und nicht aminiert ist und vorzugsweise aus den Organosiliziumverbindungen ausgewählt ist, die zugleich umfassen:
(1) hydrolysierbare, mit dem Siliziumatom verbundene Gruppen und
(2) organische Gruppen, die durch Reste substituiert sind, die aus der Gruppe der (Meth)acrylat-, Epoxy- und Alkenylreste ausgewählt sind, und noch bevorzugter aus der Gruppe, die
- das Vinyltrimethoxysilan (VTMS),
- das 3-Glycidoxypropyl-Trimethoxysilan (GLYMO),
- das Methacryloxypropyltrimethoxysilan (MEMO)
- und ihre Gemische umfasst.

5. POS-Zusammensetzung nach einem der Ansprüche 1 bis 4 **dadurch gekennzeichnet, dass** die Substituenten R¹ der funktionalisierten Polymere POS A, der R^{fo}-funktionalisierten Harze B und der fakultativen, nicht funktionalisierten und nicht reaktiven Polymere D aus der Gruppe ausgewählt sind, die gebildet wird durch:
- die Alkyl- und Halogenalkylreste, die 1 bis 13 C-Atome besitzen,
- die Cycloalkyl- und Halogencycloalkylreste, die 5 bis 13 C-Atome besitzen,
- die Alkenylreste mit 2 bis 8 C-Atomen,
- die mononukleären Aryl- und Halogenarylreste, die 6 bis 13 C-Atome besitzen,
- die Cyanoalkylreste, deren Alkylketten 2 bis 3 C-Atome besitzen, wobei die Methyl-, Ethyl-, Propyl-, Isopropyl-, n-Hexyl-, Phenyl-, Vinyl- und 3,3,3-Trifluorpropylreste besonders bevorzugt sind.

6. POS-Zusammensetzung nach einem der Ansprüche 1 bis 5 **dadurch gekennzeichnet, dass** die Silanvernetzer C, die Träger der Reste mit einer Funktionalisierung R^{fo} sind, ausgewählt sind aus:
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, (CH₂=CH)Si(OC₂H₅)₃.

7. POS-Zusammensetzung nach einem der Ansprüche 1 bis 6 **dadurch gekennzeichnet, dass** man einen Funktionalisierungskatalysator verwendet, der aus der Gruppe ausgewählt wird, die Folgendes umfasst:
- Kaliumacetat (vergl. US-A-3 504 051),
- verschiedene Mineraloxide (vergl. FR-A-1 495 011),
- Carbamate (vergl. EP-A-0 210 402),
- Lithin (vergl. EP-A-0 367 696),
- Soda oder Potasche (vergl. EP-A-0 457 693),
wobei das Lithin der Formel LiOH oder LiOH, H₂O besonders empfohlen wird.

8. POS-Zusammensetzung nach einem der Ansprüche 1 bis 7 **dadurch gekennzeichnet, dass** sie umfasst:
- 100 Gewichtsteile des (der) linearen, durch R^{fo} funktionalisierten Diorganopolysiloxans(e) A,
- 0 bis 30, bevorzugt 5 bis 15 Gewichtsteile des (der) hydroxylierten Harzes(e) B,
- 2 bis 15, bevorzugt 3,5 bis 7 Gewichtsteile des (der) Vernetzungsmittel(s) C,
- 0 bis 30, bevorzugt 5 bis 20 Gewichtsteile des (der) linearen, nicht funktionalisierten und nicht reaktiven Diorganopolysiloxans(e) D,
- 0,1 bis 10, bevorzugt 1 bis 5, Gewichtsteile des Biozids E,
- 2 bis 40, bevorzugt 8 bis 20 Gewichtsteile an Füllstoffen auf der Basis von Kieselsäure und/oder Carbonat F,
- 0,3 bis 5, bevorzugt 0,5 bis 3 Gewichtsteile des Vernetzungs-/Härtungskatalysators G und
- 0 bis 20 Gewichtsteile eines (von) Promotorhilfsmittels(n) H1,
- 0 bis 2 Gewichtsteile eines (von) Hilfsmittels(n) H2, das (die) aus einem Alkohol(en) besteht(en).

9. Nicht vergilbende Elastomere, die geeignet sind, auf verschiedenen Substraten zu haften und durch Vernetzung und Härtung der Zusammensetzung nach einem der Ansprüche 1 bis 8 erhalten werden.
